# EUROPEAN PATENT APPLICATION

(11) **EP 4 197 324 A2**
(43) Date of publication of application: **21.06.2023**
(21) Application number: 22207555.8
(22) Date of filing: 15.11.2022
(51) Int. Cl.: A01K 97/04, A47J 43/07

(54) **BAIT GRINDING**

(30) Priority: 25.11.2021 GB 202117017; 17.08.2022 GB 202212014
(71) Applicant: Ultimate Future Ltd, London EC1V 2NX (GB)
(72) Inventor: TILLER, Carl, Staines, TW18 4US (GB)
(74) Representative: King, Alex

(57) **Abstract**

The present invention relates to a method and grinder for grinding bait for fishing. In embodiments, the present invention provides a portable, electric motor driven, battery operated grinder and a method of grinding fish bait using said grinder.

## Description

The present invention relates to a method and a grinder for grinding bait for fishing.

Ground-bait is a term used to refer to bait which is cast into the water by an angler using various methods such as swim feeders, cage feeders or PVA bags, in order to attract fish to a fishing area. There are many different types of ground-bait including commercial products and products "home-produced" by individual anglers. The bait is often initially produced in the form of pellets or balls. Typical bait "forms" used by carp anglers or specimen anglers, for example, are "boilies", pellets and particles.

"Boilies", for example, are boiled paste fishing balls, usually combinations of fishmeals, milk proteins, bird foods and other ingredients, which are mixed with a binding agent and then boiled and formed into hard balls.

Another type of fish bait which is commonly used is Tigernuts. These are not actually nuts at all, but a small root vegetables with a rough texture.

Depending on the bait mixture, the balls can break up themselves in the water. However, it is common to want to grind larger bait particles, such as pellets, balls and nuts prior to use. An angler may, for example, grind these baits down to use in a bait mix or PVA bag which is a method known for delivering bait with a fishing rig inside the bag or outside dependent of the preferred fishing situation.

Manual devices for grinding or crushing bait are well-known. These include containers with turnable blades and an external manual handle for turning the blades, such as the RidgeMonkey^{®} Advanced Boilie Crusher and the NGT Multi Bait Grinder System, or smaller handheld devices such as the Korda Krusha and the NGT bait crusher where the bait is crushed by twisting. However, such devices tend to be disadvantageous because they tend to be bulky in size and also arduous on the operator and can be difficult to use.

Kitchen blenders for blending foodstuffs are also well-known. Typical products available include smoothie makers, coffee bean grinders, ice grinders and veg grinders. Most devices are mains powered. Some devices are known which are portable and battery powered, such as the BlendJet and BlendJet 2 portable blenders (https://blendjet.com), and mini garlic blenders. It has been found, however, that such devices are not suitable for grinding of the hard fish baits of the types noted above. In particular, typical battery operated blenders have insufficient power to grind hard fish baits such as boilies and Tigernuts.

Thus, the present invention relates to an improved method for the grinding of fish baits and an improved grinder for the grinding of fish baits, in particular such as boilies, pellets and Tigernuts.

Thus, in a first aspect, the present invention provides a method for grinding fish bait, said method grinding the fish bait in a portable, electric motor driven, battery operated grinder comprising (a) a base unit and (b) a container, the base unit comprising:
i) One or more batteries providing a voltage of at least 6V, and
ii) A motor, said motor being rated for the provided voltage and for a power of at least 40W, and having a no-load speed of at least 15000 rpm.

Preferably the fish bait is selected from Tigernuts, pellets, seeds or Boilies.
In a second aspect, the present invention provides a grinder for fish bait wherein the grinder is a portable, electric motor driven, battery operated grinder comprising (a) a base unit and (b) a container, the base unit comprising:
i) One or more batteries providing a voltage of at least 6V, and
ii) A motor, said motor being rated for the provided voltage and for a power of at least 40W, and having a no-load speed of at least 15000 rpm.

We will describe hereinafter the details of the grinder, and exemplify a preferred grinder. For avoidance of doubt, unless clearly identified otherwise these details apply to both for the grinder of the second aspect and the grinder as used in the method of the first aspect. Similarly, reference to "the present invention", unless identified otherwise, refers generally to both the first and second aspects of the present invention.

It is a characterising and important feature of the present invention that the grinder is a portable, electric motor driven, battery operated grinder. In particular, the grinder operates from batteries, and not a mains power supply. This ensures that it is portable, and can be used "on-site" at the fishing location. Preferably it can be charged via a power bank. In embodiments the grinder may also be powered directly off a power bank.

The grinder preferably comprises an internal battery or batteries, and preferably a rechargeable battery or batteries. For simplicity we may refer hereinafter to a "battery" but the term can be understood to refer to not only a single battery, but also two or more batteries or a battery pack. Any battery or combination of batteries which can provide the required voltage can be used. Preferred batteries are lithium based batteries. It is a requirement of the present invention that the battery or batteries can provide a voltage of at least 6V. In contrast, typical portable food and garlic blenders typically operate off of a voltage of only 5V, this also being the usual output of USB chargers. Preferably the output voltage of the battery or batteries in the present invention is 7V or above, such as 7.4V or above. The higher voltage enables the required power to be achieved at a lower current than with lower voltage operation.

Whilst higher voltages still are generally desirable for this purpose, this is at the expense of higher battery weight. Preferred voltage is therefore in the range 6 to 10V, such as 7 to 10V.

Correspondingly, the motor is rated for the provided voltage i.e. for a voltage of at least 6V, preferably a voltage of at least 7V, such as at least 7.4V. The motor is also rated for a power of at least 40W and has a no-load speed of at least 15000 rpm.

Preferably the no-load speed is at least 20000 rpm (revolutions per minute), and more preferably at least 25000 rpm, such as 25000 to 35000 rpm.

The no-load power of the motor is typically at least 12W, such as at least 15W. The no-load power may be in the range 12 to 24W, for example. The no-load current of the motor is typically at least 2A, such as at least 2.2A, and preferably at least 2.4A. The no-load current is preferably in the range 2.2A to 2.8A, such as 2.4A to 2.8A.

In operation the current (and power) will typically be higher than the no-load current (and power), and hence the motor is rated for a higher power than the no-load power. In the present invention the motor is typically rated for a maximum power in the range 40 to 150W, such as in the range 60 to 120W.

The motor is typically rated for a maximum current of at least 5A, such as at least 8A. The maximum current may, for example, be in the range 8A to 15A.

As a specific example, the motor may be a motor with a rated voltage of 3 to 7.4V and a rated power of 6.5 to 110W. When connected to a 7.4V battery pack, the motor will have a no-load current of 2.4A, and a corresponding no load power of 18W, with a no-load speed of 27000rpm. During grinding the power may be up to 110W and the current up to 15A.

To provide sufficient amounts of grinding i.e. of a number of different batches, the battery or batteries preferably have a capacity of at least 2000 mAh, more preferably at least 3000 mAh, and most preferably at least 4000 mAh.

As an example, 4000mAh at 7.4V should be generally sufficient capacity to operate the grinder for 20-30 minutes without recharging. This should be sufficient for grinding at least 20 batches of bait, such as 20-40 batches, although this depends, of course, on how long the operator grinds each batch for.

Although not preferred, in some embodiments of the present invention the motor is a geared motor with at least two gears. When a geared motor is used, the motor preferably comprises 2 or 3 gears.

Most preferably the motor is not geared. In particular, the motor is preferably a direct drive motor.

The grinder may comprise a power cable to enable a power source to be connected. For example, a permanently attached cable with a USB adaptor can be provided which can then be connected to a suitable USB charging device, such as a power bank. Alternatively the grinder may comprise a port which enables a (detachable) power cable to be connected, and this cable then enabling a power source to be connected. In a most preferred embodiment the grinder will comprise a USB charging cable or a charging port to enable charging via a USB cable so that an internal battery or batteries may be charged or recharged from a portable power bank or similar power source.

Where a cable is present, either permanently attached or detachable, the grinder may comprise a cable storage cavity in which the cable may be stored when not in use.

In one embodiment batteries may be provided in series to enable higher voltages to be produced. For example, two sets of 3.7V batteries (each set having one battery or two or more batteries in parallel) can be provided in series to enable a total voltage of 7.4V to be obtained.

In some embodiments the battery or batteries may be removable. For example, the battery or batteries, preferably in the form of a battery pack, may fit in a suitable cavity or receiver on the grinder. This has the advantage that exhausted batteries can be removed and replaced with charged batteries so the grinder can be continued to be used even in the absence of a separate power source or without having to wait for the batteries to be recharged. In this embodiment the grinder may have two or more sets of batteries (which can each provide the required voltage of at least 6V). One may be "used" in the grinder, whilst the other is a "spare" set. The "spare" set may be being charged whilst the other set is being used.

The grinder further comprises a container. This is for containing the bait whilst it is ground.

The grinder generally comprises blades which are turned by the motor to grind bait in the container. The blades may be connected to the motor by any suitable means, such as a motor shaft.

The base unit, blades and container may be configured in any suitable manner which enables bait to be placed into the container and then ground. In one embodiment the blades may be part of the base unit. By "part of the base unit" is meant that in normal operation, including during grinding and subsequently removing the ground bait, the blades remain connected to the base unit.

In one embodiment, for example, the container may be connectable to and disconnectable from the base unit, sitting over the blades when connected. For example, the container may be in the form of a cup or flask with an open end which sits over the blades and connects to e.g. screws onto, the base unit. (And typically then the base unit is inverted to connect or disconnect the container to prevent the fish bait from falling out of the open end.)

In preferred embodiments the container and base unit may form a single unit. By "single unit" in the present invention is meant that the container and base unit normally stay connected during use, and in particular during grinding and removing of ground bait. They may, for example, be in the form of a single moulded unit or are otherwise connected in a manner that they are not routinely separable. The top of the container is then open to allow fish bait to be placed in the container, and then a lid is placed over the top. An example of this is described further below with reference to the Figures.

In a particularly preferred embodiment the lid/top part may be in the form of a cup or bowl (or other form of what may be considered as a second container) which can act to hold the ground bait. Thus, once the bait has been ground the grinder may be inverted and the top part, containing the ground bait, can then be removed.

In an alternative embodiment the container contains the one or more blades and the container (and blades) are separated from the base unit once grinding has taken place. The blades are connected to the motor when the container is placed on the base unit. The one or more blades may be integrated into the base of the container. Alternatively the one or more blades may be provided as a further separate unit comprising the blades ("blade unit") which can be connected to e.g. screwed on to, the base of the container, and the combined container and blade unit can then be connected to the base unit. One advantage of this embodiment is that the container containing the ground bait can be disconnected from the base unit whilst maintaining a closed container.

A further advantage of this embodiment is that different blade configurations, either as a part of a second container or a second blade unit can be provided and used with a single base unit. Different blades units may be desirable for grinding different types of bait or for different "levels" of grinding, such as grinding to a different average particle size of the ground bait.

A yet further advantage is that blades can be more replaced easily, for example, if worn or broken.

The base unit and container (or container/blade unit combination) in this embodiment are adapted to be connected together such that the motor can turn the blades and hence grind the bait. The base unit and container can be provided with interlocking slots or recesses which hold the container firmly on the base unit. For example, the base unit top surface may comprise a recess located in the base top having an "L" shaped locking slot located an interior side wall of the recess for receiving a corresponding protrusion on the container, or a half turn thread lock, or similar. Safety mechanisms, such as locks and cut-out switches, can be provided to prevent the blades being turned unless the base unit and container are correctly connected.

Where the grinder comprises a base unit and separate container, the base unit will generally comprise the above-mentioned port or cable to enable a power source to be connected, and, where present, any cable storage cavity.

The grinder, and preferably in particular the base unit in the preferred embodiments, will also typically comprise a power button or switch to enable the grinder to be turned on and off. In some embodiments there may be other buttons or switches, for example to control the power depending on the bait to be ground. Indicators may be provided, for example to illustrate the charge remaining in the battery. A circuit board, typically a PCBA, will be provided in the base unit and connected to any switches, buttons or indicators, to the battery and to the motor.

The PCBA will generally be selected to enable it to run the motor with required voltage and power.

The container may be constructed of any suitable material. The material may be transparent or translucent (e.g. frosted), but this is not essential. It is preferably made of plastic rather than glass to avoid the risk of broken glass. Preferred materials include glass reinforced nylon and ABS (Acrylonitrile Butadiene Styrene).

The container may comprise a lid located at the end remote to its base (/the base unit when connected), which as used herein will be referred to as the top end of the container.

In embodiments where a lid is present on the container the lid may include a mechanism which prevents the motor operating without the lid in place. This provides for improved safety. In particular, it is not then possible for the motor to turn the blades unless they are completely enclosed within the container.

It should be noted that, typically, the objective of grinding fish bait is to break up the bait balls or pellets. However, it is not desired to "puree" or "liquify" them, which is the case in blenders designed to make smoothies and the like. Thus, both the dimensions of the grinder, and particularly the container, and also the blades are preferably adapted to grind rather than blend the bait.

With respect to the container, preferably the container has a diameter of 50 to 300 mm, such as 50 to 150 mm. The height is generally in the range 50 to 400 mm, such as 50 to 200 mm. In a particularly preferred embodiment the height is less than or equal to the diameter. (As used herein, these heights apply also to the combined container and blade unit where these are separable.)

The volume of the container is typically at least 500 ml, preferably 500 to 2000ml.

The inside surfaces of the container may comprise protrusions. These may be, for example, in the form of nodules or baffles. These can help to ensure material moving around the outside of the container during grinding is directed inwards, and hence is ground.

It is preferred that the base unit is of similar diameter to the container, and typically the base unit also will have a height of 50 to 400 mm, such as 50 to 200 mm, although this does not have to be the same as that of the container. As well as providing an improved control of the grinding in relation to the container, making the whole grinder compact helps to minimise space requirements, especially if carried in a fishing box or bag.

In embodiments, there may be provided a cover which covers the grinder. The cover may in general terms be used to protect the grinder from scratches. The cover may also provide some protection from impact, for example if the unit is dropped or just from general impacts whilst being carried in a fishing box or bag. Obviously in this case the level of protection will depend on the material, including the thickness, of the cover. A cover may also help to prevent the unit being accidentally switched on.

In embodiments the cover may be waterproof. A waterproof cover will protect the grinder from rain or from water from the watercourse being fished.

The cover may be removed before use of the grinder. In some embodiments, however, the grinder may be used with a cover on. A cover may, for example, be provided which provides sound-proofing to reduce noise when the grinder s being used.

With respect to the blades, typically one or two blades are sufficient. The blades may extend, relative to the diameter of the container, across only part of the diameter. Where two or more blades are provided vertically displaced from each other (relative to the axis/height of the container) then they are preferably vertically separated by at least 5mm.

However, whilst one or two blades can be sufficient, there may be any suitable number of blades. In some embodiments, as already noted, the blades may be orientated to extend across the container (relative to the axis), and in such embodiments they may extend, relative to the diameter of the container, across only part of the diameter. In other embodiments the blades may be orientated substantially parallel to the axis of the container.

Also, and as noted already, bait particles, particularly types such as Tigernuts, are very hard. Thus, the blades are preferably metal or other suitably strong material, such as stainless steel.

With respect to the blade configuration, we have further found that the blades on some prior art devices can get stuck in the pellets, either meaning that the pellets simply move around with the blades rather than being ground, or wedge between the blades and the base of the container, causing the blender to get stuck ("choke" or "stall").

Thus, we have also developed an improved blade configuration for use in a grinder, configured to be able to grind hard fish baits without choking or stalling.

Thus, in a further (third) aspect, the present invention provides a grinder for grinding fish bait, said grinder comprising
i) a container, the container having a base and a top,
ii) a spindle located within the container and comprising one or more blades connected thereto,
iii) a motor, connected to the spindle, and which turns the spindle and enables the blades to grind fishing bait in the container,
characterised in that there is also connected to the spindle at least one displacing arm, which
a) extends parallel to the base of the container,
b) is located on the spindle at a location closer to the base of the container than the one or more blades, and
c) wherein the clearance between the base of the container and the bottom of the displacing arm is less than 5mm.

It has been found that a grinder with the displacing arm as claimed can effectively grind a range of fishing baits without stalling or choking.

Without wishing to be bound by theory, it is believed that by having a displacing arm rather than a blade at the base of the container then particles of bait are lifted away from the base without catching on the arm. They are then ground by the blades above. In contrast, where blades are located at the base they can, as noted above, stick in the bait pellets rather than cut then cleanly, and then the blades can become stuck.

The displacing arm does not have a sharp edge or blade, at least on its leading edge (defined in the direction of rotation). The shape of the displacing arm is otherwise not especially critical, although it would typically have maximum thickness of 2 to 5 mm, this enabling the arm to push bait particles up and away from the base.

The displacing arm may, for example, be in the form of a rod, for example of a cylindrical shape with a diameter of 2 to 5mm.

Alternatively, the displacing arm may have a planar surface and a maximum thickness (normal to the plane) of 2 to 5 mm. For example, the displacing arm may have planar upper and lower surfaces which are parallel to each other and also to the base of the container. However, other configurations are possible - for example, the upper surface may not be parallel to the base but orientated so that its distance from the base increases away from the leading edge. This can, for example, provide an "upwards" slope that can assist in displacing pellets up into the higher parts of the container.

In general, the leading edge may be curved or flat (or a combination). Where all or part of the leading edge is flat it may be angled slightly off of the normal (to the plane), as long as a sharp edge is not formed at the leading edge. A slight "upwards" slope at the leading edge can also assist in displacing pellets up into the higher parts of the container for example.

The displacing arm should preferably extend from the spindle (at the centre of the container) to close to the edge of the container, such as within 10mm, preferably within 5mm of the edge.

The displacing arm extends parallel to the base of the container. The displacing arm may extend parallel to the base of the container over only part of its length. Generally, however, the displacing arm should extend parallel to the base across most of its length and over most of the radius of the container, such as being parallel to the base over at least 50% of the radius of the container, preferably at least 60%, and more preferably over at least 80% of the radius of the container. It may, however, and for example, comprise an upturned end near the outside of the container to also displace bait pellets away from the edges (at the base) of the container.

There may be provided one displacing arm, or two or more may be provided which extend from the spindle in different directions. For example, two displacing arms may be provided on opposite sides of the spindle, whilst 3 or more would generally be spaced approximately evenly around the spindle. (For example, 3 arms would typically be at 120° from each other.

In this third aspect there may be any suitable number of blades, such as 1 to 16 blades, or 2 to 8 blades. As noted, the blades are located above the displacing arm (i.e. at a location further from the base of the container than the displacing arm). In some embodiments, as with the first and second aspects, the blades may be orientated to extend across the container (relative to the axis). In such embodiments they may, extend, relative to the diameter of the container, across all or only part of the diameter. In such embodiments they may, for example, extend essentially parallel to the one or more displacing arms, although they will preferably be off-set. In other embodiments, which are particularly preferred in this third aspect, the blades may be orientated substantially parallel to the axis of the container (and hence substantially perpendicular to the at least one displacing arm), and in particular located in the central portion of the container (defined herein as the area which defined by a circle about the axis of the container but with 50% of the internal radius of the container). In particular, due to the presence of the displacing arm bait is agitated within the container and it is not necessary for the blades to extend across the container for effective grinding to be achieved. The parallel configuration of the blades/spacing from the side of the container minimises the risk of larger pellets becoming stuck between the blades and the sides of the container. (Substantially parallel to the axis of the container in this embodiment means within 15 degrees of the axis.)

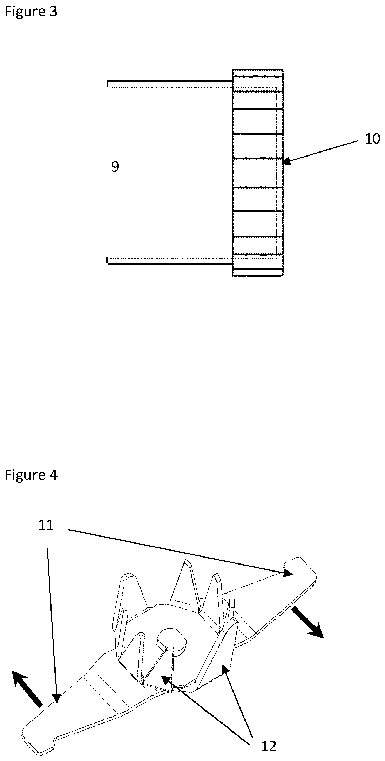

In particularly preferred embodiments at least 4, such as at least 6, for example 6 to 16, blades are provided which are orientated substantially parallel to the axis of container, and preferably located in the central portion of the container (defined as above). The cutting edges of the blades will be on the leading edge in the direction of rotation (or both "leading" and "trailing" edges if the direction of rotation can be reversed). The blades are spaced around the circumference of the circle formed by one of the blades when it rotates, and preferably largely "evenly" spaced. (For example with 4 blades the blades will be spaced with approximately 90 degrees between adjacent blades, with 6 blades with approximately 60 degrees between adjacent blades, or more generally n blades will be spaced with approximately 360/n degrees between adjacent blades. (And "approximately" in this context meaning adjacent blades being spaced within 15% of the value given by 360/n.)) The preferred number of blades and spacing is such as to prevent gaps of more than 10mm between the leading edge of one blade and the trailing edge of the next. In particular, having multiple blades with small gaps between them makes it harder for pellets to get trapped between adjacent blades. A specific example is shown in Figure 4 and described further below.

The grinder of this third aspect is used for grinding fishing bait. In a yet further (fourth) aspect, the present invention provides a provides a method for grinding fish bait using a grinder according to the third aspect.

In particularly preferred embodiments, the grinder of the third aspect and as used in the fourth aspect is a portable, electric motor driven, battery operated grinder. Most preferably the grinder is a grinder according to the second aspect of the present invention and the method is a method according to the first aspect of the present invention. In particular, the grinder comprises a base unit as well as the container, and the base unit comprising:
i) One or more batteries providing a voltage of at least 6V, and
ii) The motor, said motor being rated for the provided voltage and for a power of at least 40W, and having a no-load speed of at least 15000 rpm.

Further preferred embodiments of the third and fourth aspects are as described for the first and second aspects.

As a specific example, it was noted previously that different blades units may be desirable for grinding different types of bait or for different "levels" of grinding. In the third and fourth aspects of the present invention different blade units may be used where the displacing arm may be different. For example, the clearance of the displacing arm or arms may be selected depending in particular on the unground particle size of the pellets to be ground.

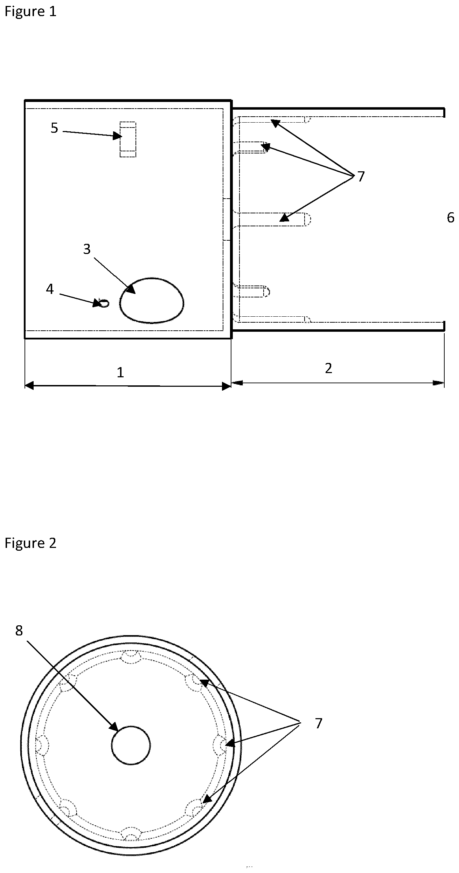

The present invention will be illustrated by reference to Figures 1 to 4 and the following Examples.

In particular, Figure 1 shows in schematic form a side view of the main body of a grinder according to the present invention. The grinder comprises a base unit (1) inside of which are provided rechargeable batteries and a motor (not shown). The grinder further comprises a container (2), which in this embodiment is moulded to the base unit. Also shown on the base unit in Figure 1 are a power button (3), an LED indicator (4) and a USB charging port (5). As shown in Figure 1, the end (6) of the container (2) is open to allow addition and removal of fish bait. Spaced around the inner surface of the container (2) are ribbed protrusions (7, not all labelled).

Figure 2 shows in schematic form an end view of the main body of the grinder of Figure 1, and in particular looking into the open end (6) of the container (2). Again, spaced around the inner surface of the container (2) are ribbed protrusions (7, not all labelled). In the centre of the container is a spindle (8). This is connected to the motor in the base unit (1). Although not shown in the Figures, blades are provided on the spindle in use.

Figure 3 shows a lid which connects on the container of the main body of Figures 1 and 2. The lid is in the form of a cup with an open end (9) which has an internal diameter slightly larger than the external diameter of the container (2). The cup sits around the container (2) during grinding, but can contain the ground bait when removed after grinding. The lid may comprise ridges on its circumference at the end (10) to facilitate its handling, including its connection to and removal from the container (2). The end (10) may be frosted so the operator can see inside the main body even when the lid is in place. This allows the operator to check the desired consistency has been achieved without opening the grinder.

Figure 4 shows a view of a preferred blade and displacing arm configuration for a grinder according to the third aspect specifically (and also according to the invention generally). In particular, the configuration comprises two displacing arms (11), and a series of 8 blades (12, not all labelled), and which in this example are orientated such that they are parallel to the axis of the container in use. The blades in Figure 4 are further provided in the central part of the configuration, such that in use they will be in the central portion of the container. More particularly, the blades are spaced around the circumference of a circle defined by the path the blades take when rotated, and are evenly spaced around this to avoid any gaps larger than 10mm between the leading edge of one blade and the trailing edge of the preceding blade. (Without wishing to be limited, in a particular configuration the distance from the centre/axis of rotation to one of the cutting edges of the blades may be approximately 10mm, whilst the distance to the end of a displacing arm may be approximately 32mm. The maximum spacing may then be approximately 5mm. A suitable container may have a radius of about 35mm.) In use this configuration is connected on the spindle of a grinder, such as that of Figure 2, and secured. The displacing arms (11) extend parallel to the base of the container and the clearance between the base of the container and the bottom of the displacing arm is, in this case, about 3mm. The blades sit just above the displacing arm (relative to the base of the container) and in use grind the bait in the container. (The large arrows show the direction of rotation in use.)

### Examples

The present invention is illustrated for the grinding of boilies.

### Comparative Example

Several different commercially available brands of boilies were tested, including Mainline High Impact Boilies, and boilies from Dynamite Baits, Crafty Carper and Wraysbury Baits. In each case a sample of the boilies were loaded into a BlendJet device which was fully charged. On turning on of the device, however, the grinder was not strong enough to blend the boilies - the blades got stuck and did not turn.

### Example 1

The grinder was a grinder according to Figures 1 to 3.

The main body of the grinder was as shown in Figure 1 and comprised a base unit and container moulded in a single body. The main body i.e. without the lid in place was 132 mm in length, whilst the grinder as a whole was 137 mm in length with the lid in place. The main body had a 75 mm outer diameter in the base unit section, and an outer diameter of 69.5 mm at the container section. The lid had a 75 mm outer diameter and an internal diameter of 70 mm, with a total length of 70mm. The grinder comprised 6 3.7V rechargeable lithium ion batteries, provided as two series sets of three parallel batteries, giving a total voltage of 7.4V. The motor was a DC motor, rated for 3-7.4V and 6.5 to 110W.

The no-load current was 2.4 A, and the no-load speed 27000 rpm.

The blades on the spindle were 4 stainless steel blades, distributed about the spindle.

Boilies of the same types as used in the Comparative Example were used. In each test, the boilies were loaded into the container and the lid fixed in place over the container. When turned on the motor was able to turn the blades and grind the boilies. Simulation of the blending estimated that the maximum current was 12.5A, corresponding to 92.5W, and obtained at 9500rpm.

### Example 2

Example 1 was repeated except that the blade configuration of Figure 4 was used.

Boilies of the same types as used in the Comparative Example and Example 1 were used. In each test, the motor was able to turn the blades and grind the boilies.

## Claims

1. A method for grinding fish bait, said method comprising grinding the fish bait in a portable, electric motor driven, battery operated grinder comprising (a) a base unit and (b) a container, the base unit comprising:
i) One or more batteries providing a voltage of at least 6V, and
ii) A motor, said motor being rated for the provided voltage and for a power of at least 40W, and having a no-load speed of at least 15000 rpm.

2. A method as claimed in claim 1 wherein the fish bait is selected from Tigernuts, pellets, seeds or Boilies

3. A method as claimed in claim 1 or claim 2 wherein the grinder comprises a USB charging cable or a charging port to enable charging via a USB cable.

4. A method as claimed in any one of the preceding claims wherein output voltage of the battery or batteries is 7V or above, such as 7.4V or above.

5. A method as claimed in any one of the preceding claims wherein the no-load power of the motor is at least 12W, such as at least 15W.

6. A method as claimed in any one of the preceding claims wherein the no-load speed is at least 20000 rpm, and preferably at least 25000 rpm.

7. A method according to any one of the preceding claims wherein the container has an internal volume of at least 500 ml, such as 500 to 2000 ml.

8. A method according to any one of the preceding claims wherein the container is made of a rigid plastic, has a diameter of 50 to 300 mm and a height in the range 50 to 400 mm.

9. A grinder according to any one of claims 7 and 8 wherein the base unit has a diameter in the range 50 to 300 mm.

10. A grinder for fish bait wherein the grinder is a portable, electric motor driven, battery operated grinder comprising (a) a base unit and (b) a container, the base unit comprising:
i) One or more batteries providing a voltage of at least 6V, and
ii) A motor, said motor being rated for the provided voltage and for a power of at least 40W, and having a no-load speed of at least 15000 rpm.

11. A grinder according to claim 10 wherein the grinder is as claimed in any one of claims 3-9.

12. A grinder for grinding fish bait, said grinder comprising
i) a container, the container having a base and a top,
ii) a spindle located within the container and comprising one or more blades connected thereto,
iii) a motor, connected to the spindle, and which turns the spindle and enables the blades to grind fishing bait in the container,
**characterised in that** there is also connected to the spindle at least one displacing arm, which
a) extends parallel to the base of the container,
b) is located on the spindle at a location closer to the base of the container than the one or more blades, and
c) wherein the clearance between the base of the container and the bottom of the displacing arm is less than 5mm.

13. A grinder according to claim 12 wherein the grinder is a portable, electric motor driven, battery operated grinder, preferably a grinder as claimed in claim 10 or claim 11.

14. A grinder according to claim 12 or claim 13 wherein the displacing arm is in the form of a rod, for example of a cylindrical shape, with a maximum thickness of 2 to 5 mm or has a planar surface and a maximum thickness (normal to the plane) of 2 to 5 mm and/or wherein the displacing arm extends from the spindle (at the centre of the container) to within 10mm, preferably within 5mm, of the edge of the container.

15. A method for grinding fish bait, said method comprising grinding the fish bait in a grinder according to any one of claims 12 to 14.
